# EUROPEAN PATENT APPLICATION

(11) **EP 4 583 303 A1**
(43) Date of publication of application: **09.07.2025**
(21) Application number: 23891951.8
(22) Date of filing: 13.11.2023
(51) Int. Cl.: H01M 50/578, H01M 50/342, H01M 50/107, H01M 50/152

(54) **SECONDARY BATTERY AND SECONDARY BATTERY MANUFACTURING METHOD**

(30) Priority: 14.11.2022 KR 20220151921; 22.09.2023 KR 20230127168
(71) Applicant: LG Energy Solution, Ltd., Seoul 07335 (KR)
(72) Inventor: MIN, Geon Woo, Daejeon 34122 (KR); DO, Jin Uk, Daejeon 34122 (KR); LEE, Hyun Hee, Daejeon 34122 (KR)
(74) Representative: Goddar, Heinz J.
(86) International application number: PCT/KR2023/018187
(87) International publication number: WO 2024/106884

(57) **Abstract**

The present invention relates to a secondary battery and a method for manufacturing the secondary battery, and relates to a secondary battery, which is capable of tightly coupling a safety vent and a current interrupt device (CID) to each other so that a leak path of an electrolyte or the like in the secondary battery is prevented from generating in a coupling part for the safety vent and the current interrupt device to improve quality of the battery, and which enables easy recognition of a weak coupling defect through an X-ray test or the like even when the safety vent and the current interrupt device are weakly coupled, so that the defect is prevented from occurring, and a method for manufacturing the secondary battery.

## Description

### TECHNICAL FIELD

### CROSS-REFERENCE TO RELATED APPLICATION

The present application claims the benefit of the priority of Korean Patent Application Nos. 10-2022-0151921, filed on November 14, 2022, and 10-2023-0127168, filed on September 22, 2023, which are hereby incorporated by reference in their entirety.

### TECHNICAL FIELD

The present invention relates to a secondary battery and a method for manufacturing the secondary battery, and more particularly, to a secondary battery, which is capable of tightly coupling a safety vent and a current interrupt device (CID) to each other so that a leak path of an inner electrolyte or the like is prevented from being generated in a coupling part for the safety vent and the current interrupt device to improve quality of the battery, and which enables easy recognition of a weak coupling defect through an X-ray test or the like even when the safety vent and the current interrupt device are weakly coupled, so that the defect is prevented from occurring, and a method for manufacturing the secondary battery.

### BACKGROUND ART

According to the shape of a battery case, secondary batteries may be classified into a cylindrical type battery and a prismatic type battery, in which an electrode assembly is embedded in a cylindrical or prismatic metal can, and a pouch type battery in which an electrode assembly is embedded in a pouch type case made of an aluminum laminate sheet.

In addition, the electrode assembly embedded in the battery case is a chargeable and dischargeable power generation device having a structure in which a positive electrode/a separator/a negative electrode are stacked, and may be classified into an electrode assembly having a jelly-roll-type structure in which long sheet-shaped positive and negative electrodes, each of which is coated with an active material, are wound by interposing a separator therebetween, an electrode assembly having a stack type structure in which a plurality of positive and negative electrodes each having a predetermined size are stacked in sequence with a separator therebetween, and a stack and folding type electrode assembly having a structure in which bicells or full cells in which positive and negative electrodes in a predetermined unit are stacked with a separator therebetween are wound.

Among the electrode assemblies, the jelly-roll-type electrode assembly has advantages such as easiness in manufacture and high energy density per weight, and thus is widely manufactured. The jelly-roll-type electrode assembly may be manufactured by assembling a stack of the long sheet-shaped positive and negative electrodes and the separator interposed therebetween, and winding the electrode stack in a longitudinal direction of the sheet in a state in which a core is in contact with one end of the electrode stack. Then, this jelly-roll-type electrode assembly may be inserted into a battery case provided in a cylindrical metal can to provide a cylindrical type secondary battery.

This cylindrical type secondary battery is designed to have high energy density. Due to this increased energy density, lithium ion secondary batteries require high standards of stability, and accordingly, a demand for cylindrical type batteries is also on an increasing trend.

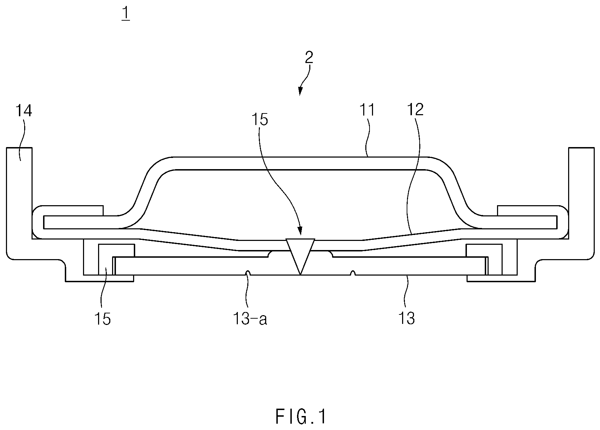

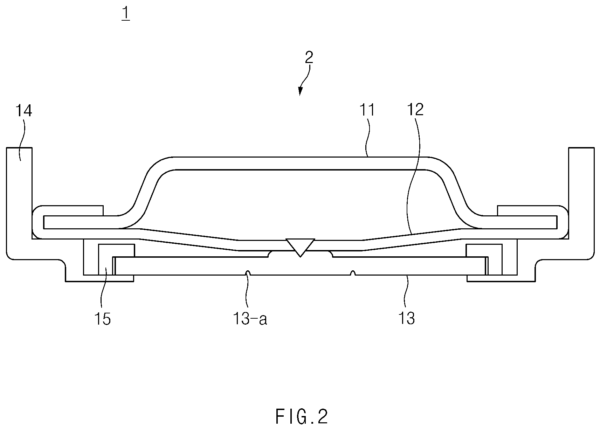

FIG. 1 is a view illustrating a state in which a safety vent and a current interrupt device are penetration-welded to each other in a secondary battery according to the related art. FIG. 2 is a view illustrating a state in which a safety vent and a current interrupt device are not penetration-welded to each other in a secondary battery according to the related art.

Referring to FIG. 1, a secondary battery 1 according to the related art includes an electrode assembly, a can that accommodates the electrode assembly, and a cap assembly 2 that covers an upper opening of the can. Among them, the cap assembly 2 is specifically illustrated in FIG. 1. The electrode assembly and the can are omitted from the drawing for convenience of explanation. In FIG. 1, the cap assembly 2 may include a top cap 11, a safety vent 12, and a current interrupt device 13. The top cap 11 may be a component that provides the outermost terminal for an electrical connection to the outside. The safety vent 12 may be disposed below the top cap 11, and connected to the top cap 11 at an outer part. At the outer part, the safety vent 12 may be seated on a main gasket 14. The safety vent 12 may be a component in which a shape of a central area 15 that is an area inside the outer part is deformed when an internal pressure of the can increases.

The current interrupt device 13 may be a component that is disposed below the safety vent 12, has a bottom surface to which an electrode tab connected to the electrode assembly is connected, and is connected to the safety vent 12 in the central area 15 of the safety vent 12. An auxiliary gasket may be disposed at an outer part of the current interrupt device so that the safety vent 12 and the current interrupt device 13 are not in contact with each other except the central area.

According to the related art, the central area 15 of the safety vent 12 and a central area of the current interrupt device 13 are welded and coupled to each other. In FIG. 1, a portion indicated by an inverted triangle represents a portion at which the central area 15 of the safety vent 12 and the central area of the current interrupt device 13 are welded and coupled to each other. A notch 13-a may be defined around the central area 15 that is this welded and coupled portion. The notch 13-a may be a portion that is broken when the internal pressure of the can increases to a critical point or more. As the notch 13-a is broken, a central area portion inside the notch 13-a may be broken to be separated from a portion outside the notch 13-a so that current is interrupted.

Specifically, before the notch 13-a is broken, a current path is provided from an electrode of the electrode assembly to an electrode tab connected to the electrode, from the electrode tab to the current interrupt device 13 connected to the electrode tab, from the current interrupt device 13 to the safety vent 12 connected thereto by welding, and from the outer part of the safety vent 12 to the top cap 11 connected to the safety vent 12. However, when the notch 13-a is broken due to the increase in internal pressure of the can, the current may no longer flow from the current interrupt device 13 to the safety vent 12 so that the current is interrupted.

When the internal pressure of the can increases, the central portion 15 of the safety vent 12 moves upward. Here, the central portion inside the notch 13-a of the current interrupt device 13, which is a portion welded to the central portion 15 of the safety vent 12, moves upward together with the safety vent 12, but the portion outside the notch 13-a of the current interrupt device 13 is in place without moving upward. As the notch 13-a portion is broken accordingly, the current may be interrupted. For this current interrupt operation, the central portion of the safety vent 12 and the central portion of the current interrupt device 13 are coupled to each other. In addition, according to the related art, weld coupling is used for this coupling.

However, when this weld coupling is performed to manufacture the secondary battery 1, there is a problem. For example, as in FIG. 1, when penetration welding occurs during the welding of the central portion of the safety vent 12 to the central portion of the current interrupt device 13, a leak path of an inner electrolyte or the like may be generated in a coupling part for the safety vent 12 and the current interrupt device 13. In this case, there is a problem that a leak risk is caused to decrease quality and safety of the secondary battery.

In addition, as in FIG. 2, when non-penetration welding occurs during the welding of the central portion of the safety vent 12 to the central portion of the current interrupt device 13, there is a problem that weak welding is likely to occur to lead a risk that current of a cell may be interrupted.

### DISCLOSURE OF THE INVENTION

### TECHNICAL PROBLEM

The present invention has been devised to solve the problems as above, and an object of the present invention is to provide a secondary battery, which is capable of tightly coupling a safety vent and a current interrupt device (CID) to each other so that a leak path of an inner electrolyte or the like is prevented from being generated in a coupling part for the safety vent and the current interrupt device to improve quality of the battery, and a method for manufacturing the secondary battery. In addition, an object of the present invention is to provide a secondary battery, which enables easy recognition of a weak coupling defect through an X-ray test or the like even when the safety vent and the current interrupt device are weakly coupled, so that the defect is prevented from occurring, and a method for manufacturing the secondary battery.

### TECHNICAL SOLUTION

A secondary battery according to the present invention includes an electrode assembly, a can in which the electrode assembly is accommodated, and a cap assembly that covers an opening of the can, wherein the cap assembly includes a top cap which provides an outermost terminal for an electrical connection to the outside, a safety vent which is disposed below the top cap and connected to the top cap at an outer part thereof, and in which, when an internal pressure of the can increases to a critical value or more, a shape or position of a predetermined area inside the outer part is changed, and a current interrupt device (CID) disposed below the safety vent, having a bottom surface to which an electrode tab connected to the electrode assembly is connected, and connected to the safety vent on the predetermined area of the safety vent, wherein a recess having a recessed shape is provided in one of the safety vent and the current interrupt device (CID), and a protrusion protruding in a shape corresponding to the recess is provided on the other of the safety vent and the current interrupt device, wherein, as the recess and the protrusion are press-fitted to each other, the safety vent and the current interrupt device (CID) are connected to each other on the predetermined area.

The predetermined area may be a central portion of the safety vent.

The recess may be provided in the form of a groove in a top surface of the current interrupt device (CID), and the protrusion may be provided on the safety vent.

Rigidity of the current interrupt device (CID) may be greater than rigidity of the safety vent.

The groove defined in the top surface of the current interrupt device (CID) may have a diameter or width that gradually increases toward the inside in a depth direction.

The protrusion provided on the safety vent may include a first safety vent portion extending downward, a second safety vent portion extending from an end of the first safety vent portion in a direction parallel to a bottom surface of the groove, and a third safety vent portion extending upward from an end of the second safety vent portion.

The recess may be provided in the form of a groove in a bottom surface of the safety vent, and the protrusion may be provided on the current interrupt device (CID).

Rigidity of the safety vent may be greater than rigidity of the current interrupt device (CID).

The groove defined in the bottom surface of the safety vent may have a diameter or width that gradually increases toward the inside in a depth direction.

The protrusion provided on the current interrupt device (CID) may include a first current interrupt device portion extending upward, a second current interrupt device portion extending from an end of the first current interrupt device portion in a direction parallel to a bottom surface of the groove, and a third current interrupt device portion extending downward from an end of the second current interrupt device portion.

A portion of the current interrupt device (CID) may be bent downward to provide the recess, and a portion of the safety vent may be bent downward to provide the protrusion.

Rigidity of the safety vent may be greater than rigidity of the current interrupt device (CID).

The recess provided on the current interrupt device (CID) may include a first current interrupt device bent portion extending downward, a second current interrupt device bent portion extending in a direction bent at an angle from an end of the first current interrupt device bent portion, and a third current interrupt device bent portion extending upward from an end of the second current interrupt device bent portion. The protrusion provided on the safety vent may include a first safety vent bent portion extending downward, a second safety vent bent portion extending from an end of the first safety vent bent portion in a direction parallel to in the direction in which the second current interrupt device bent portion extends, and a third safety vent bent portion extending upward from an end of the second safety vent bent portion.

The recess may have a diameter or width that gradually increases toward the inside in a depth direction.

A portion of the safety vent may be bent upward to provide the recess, and a portion of the current interrupt device (CID) may be bent upward to provide the protrusion.

Rigidity of the current interrupt device (CID) may be greater than rigidity of the safety vent.

The recess provided on the safety vent may include a first safety vent bent portion extending upward, a second safety vent bent portion extending in a direction bent at an angle from an end of the first safety vent bent portion, and a third safety vent bent portion extending downward from an end of the second safety vent bent portion. The protrusion provided on the current interrupt device may include a first current interrupt device bent portion extending upward, a second current interrupt device bent portion extending from an end of the first current interrupt device bent portion in a direction parallel to the direction in which the second safety vent bent portion extends, and a third current interrupt device bent portion extending downward from an end of the second current interrupt device bent portion.

The recess may have a diameter or width that gradually increases toward the inside in a depth direction.

A method for manufacturing a secondary battery according to the present invention relates to a method for manufacturing the secondary battery described above, the method including providing an electrode assembly, providing a can in which the electrode assembly is accommodated, and providing a cap assembly that covers an opening of the can, wherein the providing of the cap assembly includes a connecting process of connecting the safety vent to the current interrupt device on the predetermined area of the safety vent, wherein the connecting process includes a first process of disposing the safety vent above the current interrupt device to overlap the current interrupt device, and a second process of pressing a top surface of the safety vent or a bottom surface of the current interrupt device by a pressing unit, which is disposed above the safety vent or below the current interrupt device, so that the safety vent and the current interrupt device are press-fitted to each other.

In the first process, the safety vent may be disposed above the current interrupt device (CID) having a top surface, in which a recess is provided in the form of a groove, to overlap the current interrupt device (CID). In the second process, the pressing unit may press the top surface of the safety vent at a position corresponding to the recess to press-fit the safety vent into the current interrupt device.

In the first process, the current interrupt device may be disposed below the safety vent having a bottom surface, in which a recess is provided in the form of a groove, to overlap the safety vent. In the second process, the pressing unit may press the bottom surface of the current interrupt device at a position corresponding to the recess to press-fit the current interrupt device into the safety vent.

In the second process, the pressing unit may press the safety vent and the current interrupt device together from the top surface of the safety vent to press-fit the safety vent and the current interrupt device to each other while forming a protrusion on the safety vent, and forming a recess in the current interrupt device at the same time.

In the second process, a support unit having a shape corresponding to the pressing unit may be further provided, wherein the support unit supports the current interrupt device and the safety vent from below the current interrupt device.

In the second process, the pressing unit may press the current interrupt device and the safety vent together from the bottom surface of the current interrupt device to press-fit the current interrupt device and the safety vent to each other while forming a protrusion on the current interrupt device, and forming a recess in the safety vent at the same time.

In the second process, a support unit having a shape corresponding to the pressing unit may be further provided, wherein the support unit supports the safety vent and the current interrupt device from above the safety vent.

### ADVANTAGEOUS EFFECTS

The present invention relates to the secondary battery and the method for manufacturing the secondary battery, and may enable the tight coupling between the safety vent and the current interrupt device so that the leak path of the inner electrolyte or the like is prevented from being generated in the coupling part for the safety vent and the current interrupt device to improve the quality of the battery. In addition, even when the safety vent and the current interrupt device are weakly coupled, the easy recognition of the weak coupling defect may be enabled through the X-ray test or the like, so that the defect is prevented from occurring.

### BRIEF DESCRIPTION OF THE DRAWINGS

FIG. 1 is a view illustrating a state in which a safety vent and a current interrupt device are penetration-welded to each other in a secondary battery according to the related art.
FIG. 2 is a view illustrating a state in which a safety vent and a current interrupt device are not penetration-welded to each other in a secondary battery according to the related art.
FIG. 3 is a view of a secondary battery and a method for manufacturing the secondary battery according to Embodiment 1 of the present invention.
FIG. 4 is a view of a secondary battery and a method for manufacturing the secondary battery according to Embodiment 2 of the present invention.
FIG. 5 is a view of a secondary battery and a method for manufacturing the secondary battery according to Embodiment 3 of the present invention.
FIG. 6 is a view of a secondary battery and a method for manufacturing the secondary battery according to Embodiment 4 of the present invention.

### MODE FOR CARRYING OUT THE INVENTION

Hereinafter, preferred embodiments of the present invention will be described in detail with reference to the accompanying drawings to enable those skilled in the art to which the present invention pertains to easily carry out the present invention. The present invention may, however, be embodied in different forms and should not be construed as limited by the embodiments set forth herein.

The parts unrelated to the description, or the detailed descriptions of related well-known art that may unnecessarily obscure subject matters of the present invention, will be ruled out in order to clearly describe the present invention. The same or similar reference numerals refer to same or similar elements throughout the whole specification.

Moreover, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### Embodiment 1

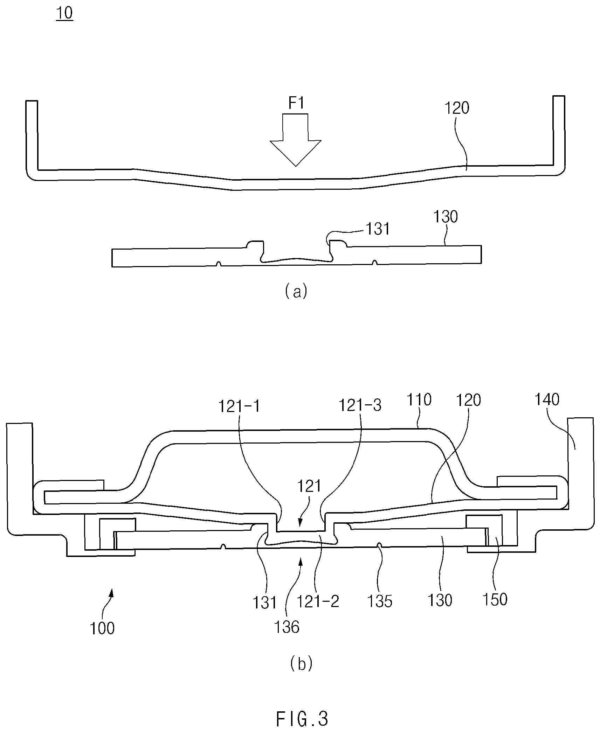

FIG. 3 is a view of a secondary battery and a method for manufacturing the secondary battery according to Embodiment 1 of the present invention. Specifically, (a) of FIG. 3 is a view of a method in which a safety vent and a current interrupt device of the secondary battery are coupled to manufacture the secondary battery, and (b) of FIG. 3 is a view illustrating the completely manufactured secondary battery in a state in which the safety vent and the current interrupt device are press-fitted.

Hereinafter, referring to FIG. 3, the secondary battery and the method for manufacturing the secondary battery according to Embodiment 1 of the present invention are described.

A secondary battery 10 according to Embodiment 1 of the present invention includes an electrode assembly (not shown), a can (not shown), and a cap assembly 100.

A positive electrode, a separator, and a negative electrode may be alternately disposed to provide the electrode assembly. The electrode assembly may be a jelly-roll-type electrode assembly having a shape in which an electrode and a separator are alternately disposed to be wound. This electrode assembly may be an electrode wound body in which one or more positive electrodes, one or more negative electrodes, and one or more separators are wound.

The can may be a component into which the electrode assembly inserted. An inner space may be defined in the can, and the electrode assembly may be vertically inserted into this inner space. Being vertically inserted may mean that the electrode assembly is inserted so that a winding axis of the electrode assembly is perpendicular to a bottom part of the can. The can may have an opening in an upper side thereof. That is, the can may be a component having the upper side that is opened, and including the bottom part and a sidewall part. The electrode assembly and the can may be an electrode assembly and a can that are generally used for a cylindrical type secondary battery.

Referring to (b) of FIG. 3, the cap assembly 100 may be a component that covers the opening in the upper side of the can. Specifically, the cap assembly 100 may be a component including a top cap 110, a safety vent 120, and a current interrupt device 130 (CID).

The top cap 110 may be a component that provides the outermost terminal for an electrical connection to the outside. The top cap 110 may include a central part having a shape, which is convex upward so as to be spaced a predetermined distance from the safety vent 120 to be described below, and an outer part which is connected to the safety vent 120.

The safety vent 120 may be disposed below the top cap 110, and connected to the top cap 110 at the outer part. The safety vent 120 may be a component in which a shape or position of a predetermined area inside the outer part is changed when the internal pressure of the can increases to a critical value or more. The predetermined area inside the outer part may have a partial shape of a disc having the lowest height at a center. The safety vent 120 may be connected to the current interrupt device 130 to be described below at a central portion 136.

The current interrupt device 130 may be disposed below the safety vent 120. An electrode tab connected to the electrode assembly may be connected to a bottom surface of the current interrupt device 130. The current interrupt device 130 may be a component connected to the safety vent 120 on the predetermined area of the safety vent 120.

In the secondary battery according to an embodiment of the present invention, a recess having a recessed shape may be provided in one of the safety vent 120 and the current interrupt device 130 (CID), and a protrusion protruding in a shape corresponding to the recess may be provided in the other of the safety vent 120 and the current interrupt device 130 (CID).

As the recess and the protrusion are press-fitted to each other, the safety vent 120 and the current interrupt device 130 (CID) are connected to each other on the predetermined area, and when the internal pressure of the can increases to a critical value or more, current may be interrupted. This may be a method in which as the shape of the predetermined area is changed or the position thereof is changed, the current is interrupted. Specifically, this may be a method in which as the shape or position of the predetermined area is changed, the predetermined area and the outer part of the current interrupt device 130 (CID) are separated from each other, or the predetermined area and the outer part of safety vent 120 are separated from each other so that the current is interrupted. The predetermined area may be, as one example, the central portion 136 of the safety vent 120.

In particular, referring to (b) of FIG. 3, the secondary battery according to Embodiment 1 of the present invention may have a specific shape as below.

That is, a recess 131 having a recessed shape may be provided in a top surface of the current interrupt device 130 (CID), and a protrusion 121 protruding in a shape corresponding to the recess 131 may be provided on the safety vent 120. The recess 131 and the protrusion 121 may be press-fitted to each other, and accordingly, the safety vent 120 and the current interrupt device 130 (CID) may be connected to each other on the predetermined area. Here, the predetermined area may be the central portion 136.

The recess 131 may be provided in the form of a groove in the top surface of the current interrupt device 130 (CID), and the protrusion 121 may be provided on the safety vent 120. Here, rigidity of the current interrupt device 130 (CID) may be greater than rigidity of the safety vent 120. Thus, it may be advantageous that the safety vent 120 is deformed to be press-fitted into the current interrupt device 130.

In addition, in the secondary battery according to Embodiment 1 of the present invention, the groove defined in the top surface of the current interrupt device 130 (CID) may have a diameter or width that gradually increases toward the inside in a depth direction. When the groove is defined in this shape, stronger coupling may be achieved. In addition, weak coupling may be more quickly identified using a medium such as X-ray.

Specifically, in the secondary battery according to Embodiment 1 of the present invention, the protrusion 121 provided on the safety vent 120 may include a first safety vent portion 121-1 extending downward, a second safety vent portion 121-2 extending from an end of the first safety vent portion 121-1 in a direction parallel to a bottom surface of the groove, and a third safety vent portion 121-3 extending upward from an end of the second safety vent portion 121-2. The first safety vent portion 121-1, the second safety vent portion 121-2, and the third safety vent portion 121-3 may be press-fitted in a shape that is in close contact with the groove. As one example, this may be press-fit coupling.

In the secondary battery according to Embodiment 1 of the present invention, due to press-fitting, tight coupling between the safety vent 120 and the current interrupt device 130 may be enabled, and a leak path of an inner electrolyte or the like may be prevented from being generated in a coupling part for the safety vent 120 and the current interrupt device 130. Accordingly, the quality of the battery may be improved. If penetration-welding is performed, the leak path may be generated, but the present invention may completely block the leak path through press-fitting.

In addition, due to this shape of the press-fitting, a weak coupling defect may be easily recognized through an X-ray test or the like even when the safety vent 120 and the current interrupt device 130 are weakly coupled. Accordingly, occurrence of the defect may be prevented.

The secondary battery according to Embodiment 1 of the present invention as above may operate in a method below.

Specifically, referring to (b) of FIG. 3, before a notch 135 is broken, a current path may be provided from an electrode of the electrode assembly to an electrode tab connected to the electrode, from the electrode tab to the current interrupt device 13 connected to the electrode tab, from the current interrupt device 13 to the safety vent 120 connected thereto by press-fitting, and from the outer part of the safety vent 120 to the top cap 110 connected to the safety vent 120.

In addition, when during usage, the notch 135 is broken due to an increase in internal pressure of the can, current may no longer flow from the current interrupt device 130 to the safety vent 120 so that the current is interrupted.

Specifically, when the internal pressure of the can increases, the central portion 136 of the safety vent 120 moves upward. Here, a central portion inside the notch 1135 of the current interrupt device 130, which is tightly coupled to the central portion 136 of the safety vent 120 by press-fitting, moves upward together with the safety vent 120. In this case, a portion outside the notch 135 of the current interrupt device 130 is in place without moving upward. Accordingly, the notch 135 portion may be broken, and an inner area and an outer area based on the broken notch may be separated from each other to interrupt the current.

The method for manufacturing a secondary battery according to Embodiment 1 of the present invention for making the secondary battery according to Embodiment 1 of the present invention may be as follows.

The method for manufacturing the secondary battery according to Embodiment 1 of the present invention includes providing an electrode assembly, providing a can in which the electrode assembly is accommodated, and providing a cap assembly 100 that covers an opening of the can.

Here, the providing of the cap assembly 100 includes a connecting process of connecting a safety vent 120 to a current interrupt device 130 on a predetermined area of the safety vent 120.

This connecting process may include a first process and a second process.

The first process may be a process of disposing the safety vent 120 above the current interrupt device 130 to overlap the current interrupt device. Specifically, in the method for manufacturing the secondary battery according to Embodiment 1 of the present invention, the safety vent 120 may be disposed above the current interrupt device 130 (CID) having a top surface, in which a recess 131 is formed in the form of a groove, to overlap the current interrupt device 130 (CID) (see (a) of FIG. 3).

The second process may be a process in which a pressing unit, which is disposed above the safety vent 120 or below the current interrupt device 130, presses a top surface of the safety vent 120 or a bottom surface of the current interrupt device 130 to press-fit the safety vent 120 and the current interrupt device 130 to each other. Specifically, in the secondary battery according to Embodiment 1 of the present invention, the pressing unit may be disposed above the safety vent 120 to press F1 the top surface of the safety vent 120 downward. The pressing unit may press the top surface of the safety vent 120 at a position corresponding to the recess 131 of the current interrupt device 130 to press-fit the safety vent 120 into the current interrupt device 130. Here, rigidity of the current interrupt device 130 (CID) may be greater than rigidity of the safety vent 120. In this case, it may be advantageous that the safety vent 120 is deformed to be press-fitted into the current interrupt device 130.

### Embodiment 2

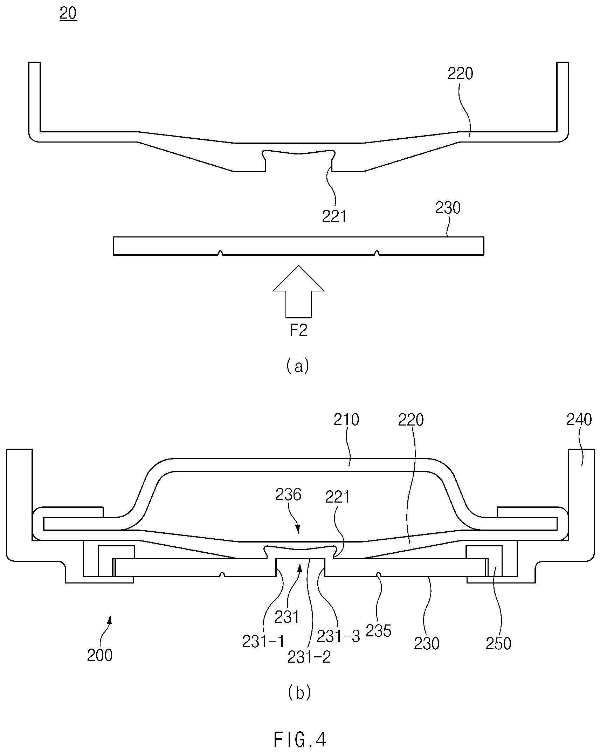

FIG. 4 is a view of a secondary battery and a method for manufacturing the secondary battery according to Embodiment 1 of the present invention. Specifically, (a) of FIG. 4 is a view of a method in which a safety vent and a current interrupt device of the secondary battery are coupled to manufacture the secondary battery, and (b) of FIG. 4 is a view illustrating the completely manufactured secondary battery in a state in which the safety vent and the current interrupt device are press-fitted.

Embodiment 2 of the present invention is different from Embodiment 1 of the present invention in that a groove that is the recess in the secondary battery according to Embodiment 1 of the present invention is defined not in the current interrupt device but in the safety vent.

Embodiment 2 will be described by omitting the content common to Embodiment 1. That is, it is apparent that the content that is not described in Embodiment 2 may be regarded as the content of Embodiment 1 if necessary.

Referring to (b) of FIG. 4, a secondary battery 20 according to Embodiment 2 of the present invention may have a specific shape as below.

That is, a recess 221 having a recessed shape may be provided in a bottom surface of a safety vent 220, and a protrusion 231 protruding in a shape corresponding to the recess 221 may be provided on a current interrupt device 230. The recess 221 and the protrusion 231 may be press-fitted to each other, and accordingly, the safety vent 220 and the current interrupt device 230 (CID) may be connected to each other on a predetermined area. Here, the predetermined area may be a central portion 236. When an internal pressure of a can increases to a critical value or more, a notch 235 defined in the current interrupt device 230 may be broken to interrupt current.

The recess 221 may be provided in the form of a groove in the bottom surface of the safety vent 220, and the protrusion 231 may be provided on the current interrupt device 230. Here, rigidity of the safety vent 220 may be greater than rigidity of the current interrupt device 230. Thus, it may be advantageous that the current interrupt device 230 is deformed to be press-fitted into the safety vent 220.

In addition, in the secondary battery according to Embodiment 1 of the present invention, the groove defined in the bottom surface of the safety vent 220 may have a diameter or width that gradually increases toward the inside in a depth direction (in (b) of FIG. 4, the diameter or width gradually increases upward). When the groove is defined in this shape, stronger coupling may be achieved. In addition, weak coupling may be more quickly identified.

Specifically, in the secondary battery according to Embodiment 1 of the present invention, the protrusion 231 provided on the current interrupt device 230 may include a first current interrupt device portion 231-1 extending upward, a second current interrupt device portion 231-2 extending from an end of the first current interrupt device portion 231-1 in a direction parallel to a bottom surface of the groove, and a third current interrupt device portion 231-3 extending downward from an end of the second current interrupt device portion 231-2. A first safety vent 220 portion, a second safety vent 220 portion, and a third safety vent 220 portion may be press-fitted in a shape that is in close contact with the groove.

In the secondary battery according to Embodiment 2 of the present invention, due to press-fitting, tight coupling between the safety vent 220 and the current interrupt device 230 may be enabled, and a leak path of an inner electrolyte or the like may be prevented from being generated in a coupling part for the safety vent 220 and the current interrupt device 230. Accordingly, the quality of the battery may be improved.

In addition, due to this shape of the press-fitting, a weak coupling defect may be easily recognized through an X-ray test or the like even when the safety vent 220 and the current interrupt device 230 are weakly coupled. Accordingly, occurrence of the defect may be prevented.

The method for manufacturing a secondary battery according to Embodiment 2 of the present invention for making the secondary battery according to Embodiment 2 of the present invention may be as follows.

A first process and a second process may be different from those in Embodiment 1.

The first process may be a process of disposing the safety vent 220 above the current interrupt device 230 to overlap the current interrupt device. Specifically, in the method for manufacturing the secondary battery according to Embodiment 2 of the present invention, the current interrupt device 230 may be disposed below the safety vent 220 having a bottom surface, in which a recess 221 is formed in the form of a groove, to overlap the safety vent 220.

Specifically, in the second process of the method for manufacturing the secondary battery according to Embodiment 2 of the present invention, a pressing unit may be disposed below the current interrupt device 230 to press F2 the bottom surface of the current interrupt device 230 upward. The pressing unit may press the bottom surface of the current interrupt device 230 at a position corresponding to the recess 221 of the safety vent 220 to press-fit the current interrupt device 230 into the safety vent 220. Here, rigidity of the safety vent 220 may be greater than rigidity of the current interrupt device 230. In this case, it may be advantageous that the current interrupt device 230 is deformed to be press-fitted into the safety vent 220.

### Embodiment 3

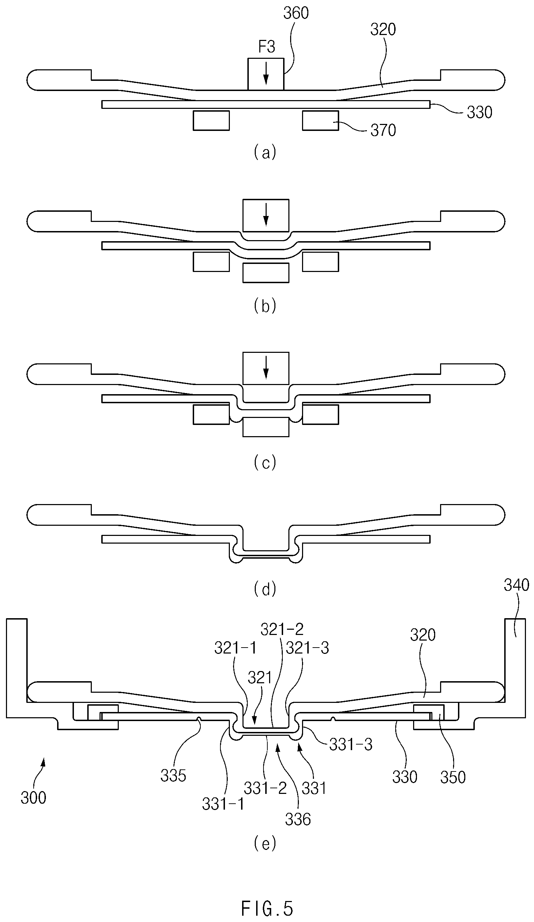

FIG. 5 is a view of a secondary battery and a method for manufacturing the secondary battery according to Embodiment 3 of the present invention. Specifically, (a) to (d) of FIG. 5 are views of a method in which a safety vent and a current interrupt device of the secondary battery are coupled to manufacture the secondary battery, and (e) of FIG. 5 is a view illustrating the completely manufactured secondary battery in a state in which the safety vent and the current interrupt device are press-fitted.

Embodiment 3 of the present invention is different from Embodiments 1 and 2 of the present invention in that a safety vent and a current interrupt device are pressed together to make a recess and a protrusion unlike the secondary batteries according to Embodiments 1 and 2 of the present invention in which the press-fitting is performed in a state in which a separate groove is defined in the safety vent or the current interrupt device.

Embodiment 3 will be described by omitting the contents common to Embodiments 1 and 2. That is, it is apparent that the content that is not described in Embodiment 3 may be regarded as the contents of Embodiments 1 and 2 if necessary.

Referring to (e) of FIG. 5, the secondary battery according to Embodiment 3 of the present invention may have a specific shape as below.

That is, a recess 331 having a recessed shape may be provided in a current interrupt device 330, and a protrusion 321 protruding in a shape corresponding to the recess 331 of the current interrupt device 330 may be provided on a safety vent 320. The recess 331 and the protrusion 321 may be press-fitted to each other, and accordingly, the safety vent 320 and the current interrupt device 330 (CID) may be connected to each other on a predetermined area. Here, the predetermined area may be a central portion 336. When an internal pressure of a can increases to a critical value or more, a notch 335 defined in the current interrupt device 330 may be broken to interrupt current.

A portion of the current interrupt device 330 (CID) may be bent downward to provide the recess 331. A portion of the safety vent 320 may be bent downward to provide the protrusion 321. Here, rigidity of the safety vent 320 may be greater than rigidity of the current interrupt device 330 (CID). That is, the rigidity of the current interrupt device 330 (CID) may be less than the rigidity of the safety vent 320.

The second process of the method for manufacturing the secondary battery described above may be differently performed in order to manufacture the secondary battery according to Embodiment 3 of the present invention.

Referring to (a) to (d) of FIG. 5, in the second process, a pressing unit 360 may press F3 the safety vent 320 and the current interrupt device 330 together from a top surface of the safety vent 320. Accordingly, the protrusion 321 may be formed on the safety vent 320, and the recess 331 may be formed in the current interrupt device 330 at the same time. Accordingly, the safety vent 320 and the current interrupt device 330 may be press-fitted to each other. Starting from (a) of FIG. 5 to (d) of FIG. 5, processes of sequentially performing the pressing by the pressing unit 360 are illustrated in order. (d) of FIG. 5 illustrates a state in which the pressing unit 360 has moved out after completing the pressing.

In the second process of the method for manufacturing the secondary battery according to Embodiment 3 of the present invention, a support unit 370 having a shape corresponding to the pressing unit 360 may be further provided. The support unit 370 may support the current interrupt device 330 and the safety vent 320 from below the current interrupt device 330.

When the safety vent 320 and the current interrupt device 330 are press-fitted and manufactured according to this manufacture method, deformation of the safety vent 320 may be greater than deformation of the current interrupt device 330. Thus, in this case, a case in which rigidity of the safety vent 320 is greater than rigidity of the current interrupt device 330 (CID), i.e., a case in which the rigidity of the current interrupt device 330 is relatively low, may be more advantageous.

The recess 331 and the protrusion 321 of the secondary battery according to Embodiment 3 of the present invention, which are manufactured through this manufacture method, may be specifically formed as follows.

Referring to (e) of FIG. 5, the recess 331 formed on the current interrupt device 330 (CID) may include a first current interrupt device bent portion 331-1 extending downward, a second current interrupt device bent portion 331-2 extending in a direction bent at an angle from an end of the first current interrupt device bent portion 331-1 (FIG. 5 illustrates a horizontal direction as one example), and a third current interrupt device bent portion 331-3 extending upward from an end of the second current interrupt device bent portion 331-2.

Corresponding to it, the protrusion 321 formed on the safety vent 320 may include a first safety vent bent portion 321-1 extending downward, a second safety vent bent portion 321-2 extending from an end of the first safety vent bent portion 321-1 in a direction parallel to the direction in which the second current interrupt device bent portion 331-2 extends, and a third safety vent bent portion 321-3 extending upward from an end of the second safety vent bent portion 321-2.

Also in the secondary battery according to Embodiment 3 of the present invention, the recess 331 may have a diameter or width that gradually increases toward the inside in a depth direction. Accordingly, stronger coupling may be achieved.

In the secondary battery according to Embodiment 3 of the present invention, due to press-fitting, tight coupling between the safety vent 320 and the current interrupt device 330 may be enabled, and a leak path of an inner electrolyte or the like may be prevented from being generated in a coupling part for the safety vent 320 and the current interrupt device 330. Accordingly, the quality of the battery may be improved.

In addition, due to this shape of the press-fitting, a weak coupling defect may be easily recognized through an X-ray test or the like even when the safety vent 320 and the current interrupt device 330 are weakly coupled. Accordingly, occurrence of the defect may be prevented.

### Embodiment 4

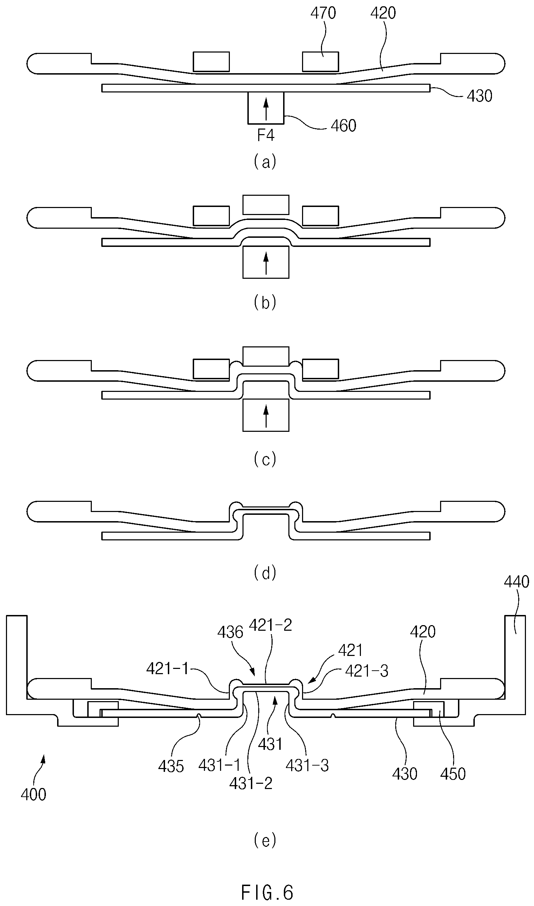

FIG. 6 is a view of a secondary battery and a method for manufacturing the secondary battery according to Embodiment 4 of the present invention. Specifically, (a) to (d) of FIG. 6 are views of a method in which a safety vent and a current interrupt device of the secondary battery are coupled to manufacture the secondary battery, and (e) of FIG. 6 is a view illustrating the completely manufactured secondary battery in a state in which the safety vent and the current interrupt device are press-fitted.

Embodiment 4 of the present invention is different from Embodiments 1 and 2 of the present invention in that a safety vent and a current interrupt device are pressed together to make a recess and a protrusion unlike the secondary batteries according to Embodiments 1 and 2 of the present invention in which the press-fitting is performed in a state in which a separate groove is defined in the safety vent or the current interrupt device. In addition, Embodiment 4 is different from Embodiment 3 in that deformation occurs in an upward direction unlike Embodiment 3.

Embodiment 4 will be described by omitting the contents common to Embodiments 1 to 3. That is, it is apparent that the content that is not described in Embodiment 4 may be regarded as the contents of Embodiments 1 to 3 if necessary.

Referring to (e) of FIG. 6, the secondary battery according to Embodiment 4 of the present invention may have a specific shape as below.

That is, a recess 421 having a recessed shape may be provided in a safety vent 420, and a protrusion 431 protruding in a shape corresponding to the recess 421 of the safety vent 420 may be provided on a current interrupt device 430. The recess 421 and the protrusion 431 may be press-fitted to each other, and accordingly, the safety vent 420 and the current interrupt device 430 (CID) may be connected to each other on a predetermined area. Here, the predetermined area may be a central portion 436. When an internal pressure of a can increases to a critical value or more, a notch 435 defined in the current interrupt device 430 may be broken to interrupt current.

A portion of the safety vent 420 may be bent upward to provide the recess 421. A portion of the current interrupt device 430 may be bent upward to provide the protrusion 431. Here, rigidity of the current interrupt device 430 (CID) may be greater than rigidity of the safety vent 420. That is, the rigidity of the safety vent 420 may be less than the rigidity of the current interrupt device 430.

The second process of the method for manufacturing the secondary battery described above may be differently performed in order to manufacture the secondary battery according to Embodiment 4 of the present invention.

Referring to (a) to (d) of FIG. 6, in the second process, the current interrupt device 430 and the safety vent 420 may be pressed F4 together from a bottom surface of the current interrupt device 430. Accordingly, the protrusion 431 may be provided on the current interrupt device 430, and the recess 421 may be provided in the safety vent 420 at the same time. Accordingly, the current interrupt device 420 and the safety vent 430 may be press-fitted to each other. Starting from (a) of FIG. 6 to (d) of FIG. 6, processes of sequentially performing the pressing by a pressing unit 460 are illustrated in order. (d) of FIG. 6 illustrates a state in which the pressing unit 460 has moved out after completing the pressing.

In the second process of the method for manufacturing the secondary battery according to Embodiment 4 of the present invention, a support unit 470 having a shape corresponding to the pressing unit 460 may be further provided. The support unit 470 may support the safety vent 430 and the current interrupt device 420 from above the safety vent 420.

When the current interrupt device 430 and the safety vent 420 are press-fitted and manufactured according to this manufacture method, deformation of the safety vent 420 may be greater than deformation of the current interrupt device 430. Thus, in this case, a case in which rigidity of the current interrupt device 430 is greater than rigidity of the safety vent 420, i.e., a case in which the rigidity of the safety vent 420 is relatively low, may be more advantageous.

The recess 421 and the protrusion 431 of the secondary battery according to Embodiment 4 of the present invention, which are manufactured through this manufacture method, may be specifically formed as follows.

Referring to (e) of FIG. 6, the recess 421 formed on the safety vent 420 may include a first safety vent bent portion 421-1 extending upward, a second safety vent bent portion 421-2 extending in a direction bent at an angle from an end of the first safety vent bent portion 421-1 (FIG. 6 illustrates a horizontal direction as one example), and a third safety vent bent portion 421-3 extending downward from an end of the second safety vent bent portion 421-2.

Corresponding to it, the protrusion 431 formed on the current interrupt device 430 may include a first current interrupt device bent portion 431-1 extending upward, a second current interrupt device bent portion 431-2 extending from an end of the first current interrupt device bent portion 431-1 in a direction parallel to the direction in which the second safety vent bent portion 421-2 extends, and a third current interrupt device bent portion 431-3 extending downward from an end of the second current interrupt device bent portion 431-2.

Also in the secondary battery according to Embodiment 4 of the present invention, the recess 421 may have a diameter or width that gradually increases toward the inside in a depth direction. Accordingly, stronger coupling may be achieved.

In the secondary battery according to Embodiment 4 of the present invention, due to press-fitting, tight coupling between the safety vent and the current interrupt device may be enabled, and a leak path of an inner electrolyte or the like may be prevented from being generated in a coupling part for the safety vent and the current interrupt device. Accordingly, the quality of the battery may be improved.

In addition, due to this shape of the press-fitting, a weak coupling defect may be easily recognized through an X-ray test or the like even when the safety vent and the current interrupt device are weakly coupled. Accordingly, occurrence of the defect may be prevented.

Although the present invention has been described with reference to the limited embodiments and drawings, the present invention is not limited thereto and may be variously implemented by those of ordinary skill in the art to which the present invention pertains, within the technical idea of the present invention and an equivalent of the appended claims.

### [Description of the Symbols]

10, 20: Secondary battery
100, 200, 300, 400: Cap assembly
110, 210, 310, 410: Top cap
120, 220, 320, 420: Safety vent
121: Protrusion
121-1: First safety vent portion
121-2: Second safety vent portion
121-3: Third safety vent portion
131: Recess
135, 235, 335, 435: Notch
136, 236, 336, 436: Central portion
130, 230, 330, 430: Current interrupt device (CID)
140, 240, 340, 440: Main gasket
150, 250, 350, 450: Auxiliary gasket
221, 331, 421: Recess
231, 321, 431: Protrusion
231-1: First current interrupt device portion
231-2: Second current interrupt device portion
231-3: Third current interrupt device portion
321-1, 421-1: First safety vent bent portion
321-2, 421-2: Second safety vent bent portion
321-3, 421-3: Third safety vent bent portion
331-1, 431-1: First current interrupt device bent portion
331-2, 431-1: Second current interrupt device bent portion
331-3, 431-1: Third current interrupt device bent portion
360, 460: Pressing unit
370, 470: Support unit

## Claims

1. A secondary battery comprising:
an electrode assembly;
a can in which the electrode assembly is accommodated; and
a cap assembly configured to cover an opening of the can,
wherein the cap assembly comprises:
a top cap configured to provide an outermost terminal for an electrical connection to the outside;
a safety vent which is disposed below the top cap and connected to the top cap at an outer part thereof, and in which, when an internal pressure of the can increases to a critical value or more, a shape or position of a predetermined area inside the outer part is changed; and
a current interrupt device (CID) disposed below the safety vent, having a bottom surface to which an electrode tab connected to the electrode assembly is connected, and connected to the safety vent on the predetermined area of the safety vent,
wherein a recess having a recessed shape is provided in one of the safety vent and the current interrupt device (CID), and a protrusion protruding in a shape corresponding to the recess is provided on the other of the safety vent and the current interrupt device,
wherein, as the recess and the protrusion are press-fitted to each other, the safety vent and the current interrupt device (CID) are connected to each other on the predetermined area.

2. The secondary battery of claim 1, wherein the predetermined area is a central portion of the safety vent.

3. The secondary battery of claim 1, wherein the recess is provided in the form of a groove in a top surface of the current interrupt device (CID), and
the protrusion is provided on the safety vent.

4. The secondary battery of claim 3, wherein rigidity of the current interrupt device (CID) is greater than rigidity of the safety vent.

5. The secondary battery of claim 3, wherein the groove defined in the top surface of the current interrupt device (CID) has a diameter or width that gradually increases toward the inside in a depth direction.

6. The secondary battery of claim 3, wherein the protrusion provided on the safety vent comprises:
a first safety vent portion extending downward;
a second safety vent portion extending from an end of the first safety vent portion in a direction parallel to a bottom surface of the groove; and
a third safety vent portion extending upward from an end of the second safety vent portion.

7. The secondary battery of claim 1, wherein the recess is provided in the form of a groove in a bottom surface of the safety vent, and
the protrusion is provided on the current interrupt device (CID).

8. The secondary battery of claim 7, wherein rigidity of the safety vent is greater than rigidity of the current interrupt device (CID).

9. The secondary battery of claim 7, wherein the groove defined in the bottom surface of the safety vent has a diameter or width that gradually increases toward the inside in a depth direction.

10. The secondary battery of claim 7, wherein the protrusion provided on the current interrupt device (CID) comprises:
a first current interrupt device portion extending upward;
a second current interrupt device portion extending from an end of the first current interrupt device portion in a direction parallel to a bottom surface of the groove; and
a third current interrupt device portion extending downward from an end of the second current interrupt device portion.

11. The secondary battery of claim 1, wherein a portion of the current interrupt device (CID) is bent downward to provide the recess, and
a portion of the safety vent is bent downward to provide the protrusion.

12. The secondary battery of claim 11, wherein rigidity of the safety vent is greater than rigidity of the current interrupt device (CID).

13. The secondary battery of claim 11, wherein the recess provided on the current interrupt device (CID) comprises:
a first current interrupt device bent portion extending downward;
a second current interrupt device bent portion extending in a direction bent at an angle from an end of the first current interrupt device bent portion; and
a third current interrupt device bent portion extending upward from an end of the second current interrupt device bent portion,
wherein the protrusion provided on the safety vent comprises:
a first safety vent bent portion extending downward;
a second safety vent bent portion extending from an end of the first safety vent bent portion in a direction parallel to in the direction in which the second current interrupt device bent portion extends; and
a third safety vent bent portion extending upward from an end of the second safety vent bent portion.

14. The secondary battery of claim 11, wherein the recess has a diameter or width that gradually increases toward the inside in a depth direction.

15. The secondary battery of claim 1, wherein a portion of the safety vent is bent upward to provide the recess, and
a portion of the current interrupt device (CID) is bent upward to provide the protrusion.

16. The secondary battery of claim 15, wherein rigidity of the current interrupt device (CID) is greater than rigidity of the safety vent.

17. The secondary battery of claim 15, wherein the recess provided on the safety vent comprises:
a first safety vent bent portion extending upward;
a second safety vent bent portion extending in a direction bent at an angle from an end of the first safety vent bent portion; and
a third safety vent bent portion extending downward from an end of the second safety vent bent portion,
wherein the protrusion provided on the current interrupt device comprises:
a first current interrupt device bent portion extending upward;
a second current interrupt device bent portion extending from an end of the first current interrupt device bent portion in a direction parallel to the direction in which the second safety vent bent portion extends; and
a third current interrupt device bent portion extending downward from an end of the second current interrupt device bent portion.

18. The secondary battery of claim 15, wherein the recess has a diameter or width that gradually increases toward the inside in a depth direction.

19. A method for manufacturing the secondary battery of claim 1, the method comprising:
providing an electrode assembly;
providing a can in which the electrode assembly is accommodated; and
providing a cap assembly that covers an opening of the can,
wherein the providing of the cap assembly comprises a connecting process of connecting the safety vent to the current interrupt device on the predetermined area of the safety vent,
wherein the connecting process comprises:
a first process of disposing the safety vent above the current interrupt device to overlap the current interrupt device; and
a second process of pressing a top surface of the safety vent or a bottom surface of the current interrupt device by a pressing unit disposed above the safety vent or below the current interrupt device, so that the safety vent and the current interrupt device are press-fitted to each other.

20. The method of claim 19, wherein, in the first process, the safety vent is disposed above the current interrupt device (CID) having a top surface, in which a recess is formed in the form of a groove, to overlap the current interrupt device (CID),
wherein, in the second process, the pressing unit presses the top surface of the safety vent at a position corresponding to the recess to press-fit the safety vent into the current interrupt device.

21. The method of claim 19, wherein, in the first process, the current interrupt device is disposed below the safety vent having a bottom surface, in which a recess is formed in the form of a groove, to overlap the safety vent,
wherein, in the second process, the pressing unit presses the bottom surface of the current interrupt device at a position corresponding to the recess to press-fit the current interrupt device into the safety vent.

22. The method of claim 19, wherein, in the second process, the pressing unit presses the safety vent and the current interrupt device together from the top surface of the safety vent to press-fit the safety vent and the current interrupt device to each other while forming a protrusion on the safety vent, and forming a recess in the current interrupt device at the same time.

23. The method of claim 22, wherein, in the second process, a support unit having a shape corresponding to the pressing unit is further provided,
wherein the support unit supports the current interrupt device and the safety vent from below the current interrupt device.

24. The method of claim 19, wherein, in the second process, the pressing unit presses the current interrupt device and the safety vent together from the bottom surface of the current interrupt device to press-fit the current interrupt device and the safety vent to each other while forming a protrusion on the current interrupt device, and forming a recess in the safety vent at the same time.

25. The method of claim 24, wherein, in the second process, a support unit having a shape corresponding to the pressing unit is further provided,
wherein the support unit supports the safety vent and the current interrupt device from above the safety vent.
